# EUROPEAN PATENT APPLICATION

(11) **EP 2 833 582 A1**
(43) Date of publication of application: **04.02.2015**
(21) Application number: 13768929.5
(22) Date of filing: 26.03.2013
(51) Int. Cl.: H04L 12/701, G06F 13/00

(54) **COMPUTER SYSTEM AND COMMUNICATION PATH MODIFICATION MEANS**

(30) Priority: 28.03.2012 JP 2012074936
(71) Applicant: NEC Corporation, Tokyo 108-8001 (JP)
(72) Inventor: HAMADA, Yoshitaka, Tokyo 108-8001 (JP)
(74) Representative: Robson, Aidan John
(86) International application number: PCT/JP2013/058846
(87) International publication number: WO 2013/146808

(57) **Abstract**

A computer system of the present invention includes a controller; a plurality of switches configured to carry out relay processing of a reception packet based on a flow entry set by said controller; and a plurality of storage systems. The controller changes the flow entry of each of the plurality of switches based on resource data acquired from the plurality of storage systems, to change the storage system of the plurality of storage systems as an access destination of a client terminal. Thus, The whole network system can be managed and used without being conscious of each of the plurality of storage systems and the situation of the whole network.

## Description

### Technical Field

The present invention is related to a computer system and a communication route change, and especially to a computer system and a communication route changing method which use an open flow technique.

### Background Art

In a conventional storage system, a controller section of each of storages carries out a cluster control of dominated storage systems. Therefore, when the cluster control should be realized in the storage system under a cloud environment by using a global name space, an administrator needs to set a cooperation function among the storage systems to the controller section of each storage. Also, the storage system needs to have a function corresponding to the control.

Also, in a conventional storage system, a priority access control to a storage system for a user is realized through the cooperation function of the storage system and an authentication server such as an ADS (Active Directory Server) and a LDAP (Lightweight Directory Access Protocol) server.

On the other hand, in the system under a cloud environment, it is required to continue to provide service to the user without be conscious of the manufacturing stop of specific network appliance products and a storage system and a situation of the storage system and the network, by shifting to new network appliance products and the storage systems based on a policy. For example, such a system can be realized by the open flow technique which controls a transfer operation of each switch under a central control by an external controller (reference Non-Patent Literature 1).

A network switch (hereinafter, to be referred to as an "open flow switch (OFS)") using an open flow technique holds detailed data of a protocol type and port numbers and so on in a flow table, and can carry out a flow control and collection of statistic data. The flow table of the open flow switch (OFS) is set by a controller (hereinafter, to be referred to as an "open flow controller (OFC)") provided separately from the open flow switch (OFS). The open flow controller (OFC) sets a communication route between nodes and a transfer operation (relay operation) to the open flow switches (OFS) on the communication route. At this time, the open flow controller (OFC) sets to the flow table of the open flow switch (OFS), a flow entry which relates a rule for specifying a flow of packets (packet data) and an action which prescribes processing of the flow of packets. For example, the contents of the flow entry which are set to the flow table are prescribed in Non-Patent Literature 1.

The open flow switch (OFS) on the communication route determines a transmission destination of a reception packet according to the flow entry set by the open flow controller (OFC) and carries out transfer processing of the reception packet. Thus, the node on the network can transmit and receive the packets to and from another node by using the communication route set by the open flow controller (OFC). That is, in a computer system using the open flow technique, the communication of the whole system can be subjected to the central control and management by the open flow controller (OFC) provided separately from the open flow switch (OFS) which carries out the transfer processing.

The open flow controller (OFC) calculates the communication route in response to a request from the open flow switch (OFS) and updates the flow table in each of the open flow switches (OFS) on the communication route. In detail, when receiving the packet which is not prescribed in its own flow table, the open flow switch (OFS) notifies the packet to the open flow controller (OFC). The open flow controller (OFC) generates a flow entry (rule + action) used to specify a source and a destination based on the header data of the notified packet and updates the flow table of each of the open flow switches (OFS) on the communication route.

Because the open flow controller (OFC) can carry out the transfer control between client terminals in units of flows prescribed by the header data of L1 to L4 levels, the open flow controller (OFC) can virtualize the network optionally. Thus, the constraint of the physical configuration is eased, so that the building of virtual tenant environment becomes easy and an initial investment cost by the scale out can be reduced.

Also, for example, a technique of the storage system is disclosed in JP 2002-207629A (Patent Literature 1), JP 2004-21818A (Patent Literature 2), JP 2005-323245A (Patent Literature 3), and JP 2006-516054 (Patent Literature 4).

In a system described JP 2002-207629A, two kinds of upper limits of a usable capacity are set to a storage and the storage is determined based on which of the upper limits a data quantity handled by a user exceeded. A system disclosed in JP 2004-21818A separates an access flow by using a table in which a transmission source storage identifier and a transmission destination storage identifier are related to each other, and an identifier which identifies a storage access flow, and carries out a priority control for every access flow. A virtual switch disclosed in JP 2005-323245A carries out a flow control according to a communication quality by using a filtering table in which processing of guaranteeing a communication quality and the access flow are related to each other. An IP processor disclosed in JP 2006-516054A carries out passage packet classification, policy processing and security processing and maintains a maximum line speed.

### Citation List

[Patent Literature 1] JP 2002-207629A
[Patent Literature 2] JP 2004-21818A
[Patent Literature 3] JP 2005-323245A
[Patent Literature 4] JP 2006-516054A
[Non-Patent Literature 1] OpenFlow Switch Specification Version 1.0.0 (Wire Protocol 0x01) December 31, 2009

### Summary of the Invention

Conventionally, a highly reliable storage system has been realized by utilizing a cluster technique. In the cluster technique, a controller section connected with a network is duplicated to guarantee the operation of a single disk controller section. In recent years, a configuration is possible in which more controller sections control one system in a storage system under a cloud environment and a storage system virtualized by a global name space. Therefore, a complicated cooperation function between the storage systems becomes necessary.

Also, in order to carry out a priority access control of a user in such a system, the cooperation of the storage system and authentication servers such as an ADS and an LDAP server becomes necessary. Therefore, in order to realize the priority access control of the user in the plurality of storage systems under the cloud environment, data of the user needs to be set to every storage system.

The conventional network system is configured from a plurality of network appliance products for functions and has a complicated configuration. For maintenance of the network appliances, a service man needs to be familiar with the maintenance methods.

As described above, in a network system which has a plurality of systems controlled by a plurality of controllers, the cooperation among the systems and the setting for the priority access control must be carried out for every system. In this case, the user needs to grasp a situation of each of the systems controlled by the controllers and a situation of the whole network system, when managing and using the whole network system. Also, because the maintenance according to the network appliance products should be carried out, the maintenance management becomes complicated.

Therefore, an object of the present invention is to manage and use the whole network system in the network system which has a plurality of systems without being conscious of the situation of each of the plurality of systems and the whole network system.

Another object of the present invention is to simply set a priority access control in units of users in a network system which has a plurality of systems.

In an aspect, a computer system of the present invention includes a controller, a plurality of switches which carry out relay processing of a reception packet according to a flow entry set by the controller, and a plurality of storage systems. The controller changes the flow entries of the plurality of switches based on resource data collected from the plurality of storage systems to change one storage system of the plurality of storage systems as access destination of a client terminal.

In another aspect, a communication route changing method according to the present invention includes a step of setting by a controller, a flow entry which prescribes a destination of a reception packet in the switch, to the switch on a communication route, and a step of changing by the controller, the flow entry of the switch based on resource data collected from a plurality of storage systems to change one storage system of the plurality of storage systems as an access destination of a client terminal.

It is preferable that the communication route changing method of the present invention is realized by a program stored in a recording medium and executed by a computer.

According to the present invention, in the network system which has the plurality of storage systems, the whole network system can be managed and used without being conscious of the situation of each of the plurality of storage systems and the whole network system.

Also, according to the present invention, the priority access control in units of users can be set simply in the network system which has the plurality of systems.

### Brief Description of the Drawings

An object, advantages, and features of the above invention become clearer from the description of the following exemplary embodiments in cooperation with the attached drawings:
FIG. 1 is a diagram showing a configuration of a computer system according to an exemplary embodiment of the present invention.
FIG. 2 is a diagram showing a configuration of an open flow controller according to the exemplary embodiment of the present invention.
FIG. 3 is a diagram showing an example of the configuration of resource data in the present invention.
FIG. 4A is a diagram showing an example of the configuration of location policy data in the present invention.
FIG. 4B is a diagram showing another example of the configuration of the location policy data in the present invention.
FIG. 5 is a diagram showing an example of the configuration of access policy data in the present invention.
FIG. 6 is a diagram showing the configuration of an open flow switch according to the exemplary embodiment of the present invention.
FIG. 7 is a flow chart showing an example of the operation of a flow switching in the computer system according to the exemplary embodiment of the present invention.

### Description to Exemplary Embodiments

### (Overview)

An open flow controller (OFC) according to the present invention holds resource data of each of the plurality of storage systems (for example, data about the performance, load, and directory/file location of the storage system), and determines the storage system as an access destination by a user through a flow control based on the resource data. Moreover, the open flow controller (OFC) according to the present invention realizes an access control according to a priority of the user by carrying out the flow control based on the priority of the user. In this way, the computer system of the present invention realizes location management and a priority access control of the storage system easily by carrying out the resource management of the storage systems by the open flow controller (OFC) without adding a special function to the storage systems. The computer system of the present invention is preferably used for an in-house network and the Internet/cloud environment and so on.

Hereinafter, an exemplary embodiment of the present invention will be described with reference to the attached drawings. In the drawings, an identical or similar reference shows an identical or similar component.

### (Configuration of computer system)

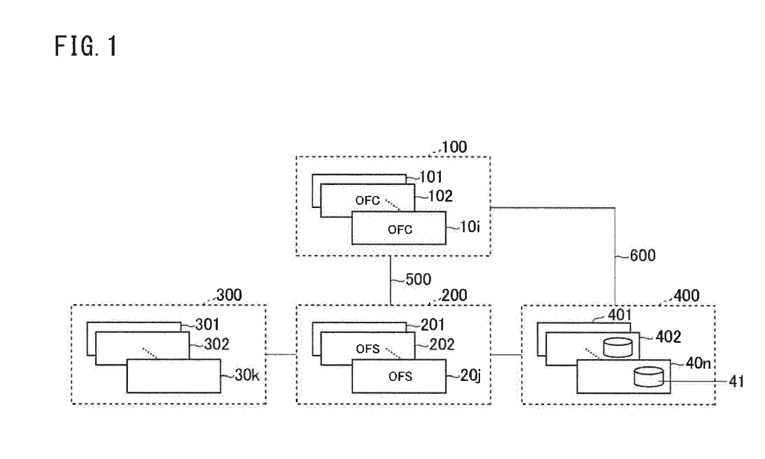

In the computer system of the present invention, the building of a communication route and a transfer control of packets are carried out according to the open flow protocol. FIG. 1 is a diagram showing the configuration of the computer system according to the exemplary embodiment of the present invention. Referring to FIG. 1, the computer system of the present invention includes a controller group 100 which has a plurality of open flow controllers (OFC) 101 to 10i, a switch group 200 which has a plurality of open flow switches (OFS) 201 to 20j, a client terminal group 300 which has a plurality of client terminals 301 to 30k, and a storage system group 400 which has a plurality of storage systems 401 to 40n. Here, each of i, j, k, and n is a natural number.

The open flow controllers (OFC) 101 to 10i are connected with the open flow switches (OFS) 201 to 20j through a secure network 500 and are connected with the storage systems 401 to 40n through a network 600. The open flow controllers (OFC) 101 to 10i set flow entries (rule + action) to flow tables 23 of the open flow switches (OFS) 201 to 20j through the control network 500. The open flow switches (OFS) 201 to 20j notify first packets to the open flow controllers (OFC) 101 to 10i through the control network 500.

It is desirable that the open flow switches (OFS) respectively controlled by the open flow controllers (OFC) 101 to 10i are predetermined, and the plurality of open flow controllers (OFC) may control the same open flow switch (OFS). In this case, the open flow switch (OFS) notifies the first packet to the plurality of open flow controllers (OFC), and the plurality of open flow controllers (OFC) determine whether or not a flow entry should be set to the open flow switch (OFS) based on the header data of the first packet. For example, the flow of packets which can be set for every open flow controller (OFC) has been determined, and the open flow controller (OFC) which conforms to the settable flow (rule) sets the flow entry to a flow table of the open flow switch (OFS) as a notification source of the first packet of the packets.

Each of the client terminals 301 to 30k is a computer system having a CPU, a network interface (I/F) and a memory (not shown), and communicates with the storage system groups 400 by executing a program in the memory. The client terminal group 300 is connected with the storage system group 400 through the switch group 200. Each of the client terminals 301 to 30k accesses anyone of the plurality of storage systems 401 to 40n through any of the plurality of open flow switches (OFS) 201 to 20j. In this case, each of the open flow switches (OFS) 201 to 20j carries out relay processing of the packet transferred from anyone of the client terminals 301 to 30k based on the flow table 18 set by any of the open flow controllers (OFC) 101 to 10i through the control network 500.

Each of the storage systems 401 to 40n has a controller and a storage section 41 (not shown). The storage section 41 is exemplified by a disk array which has a plurality of physical disks (RAID: Redundant Arrays of Independent Disks), a logical disk, SAN (Storage Area Network) or NAS (Network Attached Storage). When the storage system 40n is the disk array, the storage section 41 is realized by the plurality of physical disks which are controlled by the disk controller (not shown). Or, when the storage system 40n is SAN or NAS, the storage section 41 is realized by storage units such as the disk array which is controlled by a server (not shown).

System data, performance data, load data, and directory/file location data of the storage system 40n to which the storage section 41 belongs, are stored in the storage section 41. Here, the system data contains data for specifying the storage system 40n (identifier and address data) and a communication standard. The performance data contains data indicative of the system performance such as a data transfer rate of the storage system 40n, the number of times of input/output (I/O) for every unit time, a response time, and a memory capacity. The load data contains data indicative of an access load to the storage system 40n (e.g. a response time, a transaction quantity, a data transfer quantity, a latency) and a processing load of a controller (not shown) of the storage system 40n (a CPU load average and so on). Also, it is desirable that the load data contains data indicative of existence or non-existence of a failure in the storage system 40n and data indicative of the content of the failure. Moreover, it is desirable that the load data contains data indicative of use inhibition of the storage system 40n (for example, data indicative of a maintenance time). The storage system 40n collects (measures) the load data and records the load data in the storage section 41 regularly or at a time specified by the user. The directory/file location data is data which specifies the directory and the locations of files which are set in the storage section 41. The system data, the performance data, the load data, and the directory/file location data of the storage system 40n may be managed for every storage system and be recorded to each storage section 41, and may be recorded in a storage (not shown) which is different from the storage section 41 (for example, a storage in the server which functions as a controller).

In the storage system group 400, each of the storage systems 401 to 40n has a general synchronization function by use of replication among the housings.

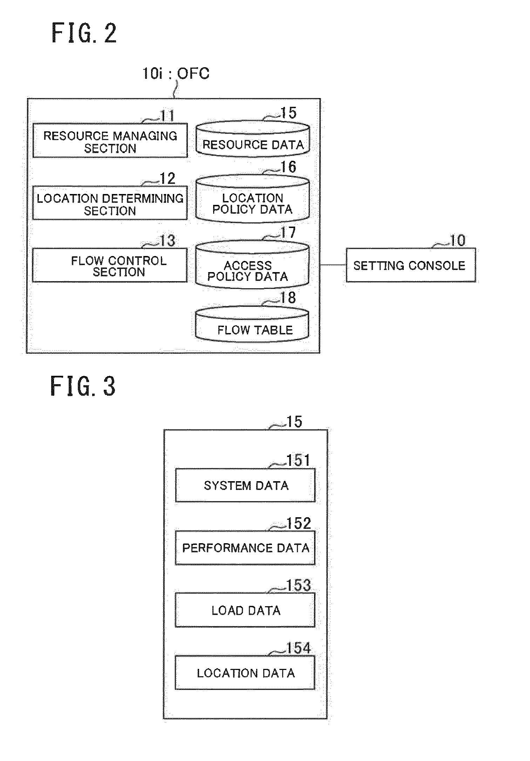

With reference to FIG. 2 to FIG. 5, the details of the configuration of the open flow controller (OFC) 10i according to the present invention will be described. Although the configuration of the open flow controller (OFC) 10i will be described below, other open flow controllers (OFC) 101 to 10(i-1) have the same configuration as that of the open flow controller 10i and the description is omitted.

FIG. 2 is a diagram showing the configuration of the open flow controller (OFC) 10i according to the exemplary embodiment of the present invention. The open flow controller (OFC) 10i has the flow control section 13 which controls the communication route packet transfer processing in the packet transfer in the system by the open flow technique. In the open flow technique, the controller (in this case, the open flow controller (OFC) 10i) sets the route data in units of flows to the open flow switch (OFS) 20j according to a routing policy (flow entry: flow + action) and carries out a route control and a node control (for the details, refer to Non-Patent Literature 1). Thus, a route control function is separated from a router and a switch, and the optimal routing and the traffic management become possible through the integrated control by the controller. The open flow switch (OFS) 20j to which the open flow technique is applied is not the unit of packet and frame like the conventional router and switch, but handles communication as the flow of END2END.

The open flow controller (OFC) 10i is realized by a computer having a CPU (not shown), a network I/F and a memory. In the open flow controller (OFC) 10i, functions of a resource managing section 11, a location determining section 12, and a flow control section 13 shown in FIG. 2 are realized by the CPU executing a program stored in a recording medium such as a memory. Also, resource data 15, location policy data 16, access policy data 17, and a flow table 18 are recorded in the memory (not shown) of the open flow controller (OFC) 10i. The open flow controller (OFC) 10i is connected with a setting console 10 and the location policy data 16 is set by the setting console 10. Also, after connecting with the network by the switch group 200, the location policy data 16 can be set through the network. Note that the resource data 15 and the location policy data 16 may be shared by another open flow controller (OFC). For example, the resource data 15 and the location policy data 16 are recorded in the memory (not shown) in the accessible condition from another open flow controller (OFC) in the controller group 100. Or, the resource data 15 and the location policy data 16 are recorded in a common storage (not shown) to the open flow controllers (OFC) 101 to 10i.

The resource managing section 11 collects the system data, the performance data, the load data, and the directory/file location data of each of the storage systems 401 to 40n to record in a storage (not shown) as resource data 15. For example, the resource managing section 11 collects the resource data 15 by a method of using SNMP (Simple Network Management Protocol) and a method of collecting data from the load collection agent (not shown) located in the storage system 40n.

FIG. 3 is a diagram showing an example of the configuration of the resource data 15 in the present invention. The system data, the performance data, the load data, and the directory/file location data of each of the storage systems 401 to 40n are related to each other and recorded as system data 151, performance data 152, load data 153, and location data 154. Thus, the open flow controller (OFC) 10i can manage the performance, the load, the failure situation, and the directory/file location for every storage system.

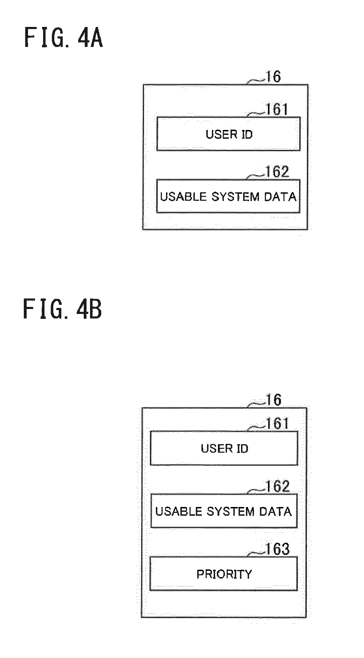

In the location policy data 16, a usable storage system is related and recorded for every client terminal (for every user). FIG. 4A and FIG. 4B are diagrams showing an example of the configuration of the location policy data 16 according to the present invention. With reference to FIG. 4A, a user ID 161 which specifies a client terminal, and a usable system data 162 used when the client terminal specifies a usable storage system are related and set to the location policy data 16. For example, when the storage systems 401 to 403 are set to be usable for the client terminal 301, the user ID 161 showing the client terminal 301 and the system data 151 showing the storage systems 401 to 403 are related and set as the location policy data 16. Or, as shown in FIG. 4B, a priority 163 may be further related to the user ID 161. For example, when the client terminal 301 has a priority higher than that of the client terminal 302, the priority 163 of "1" is related to the user ID 161 showing the client terminal 301, and the priority 163 of "2" lower than the priority 163 of "1" is related to the user ID 161 showing the client terminal 302 and they are set as the location policy data 16.

The location determining section 12 distributes the directory/file location of the client terminal group 300 to the storage systems 401 to 40n from the whole of directory/file location data (resource data 15) of the storage system group 400, and records the data as access policy data 17. At this time, the location determining section 12 grasps a load for every location according to the load data 153 and allocates an access destination according to the load and the priority. Thus, the file accesses by the client terminal group 300 (containing write/read the file and directory, and a file attribute operation) are distributed.

In detail, the location determining section 12 determines the directory/file location (storage system) which each of the client terminals 301 to 30k accesses (containing write/read/operation of file attribute) based on the resource data 15 and the location policy data 16. Here, the location determining section 12 refers to the resource data 15 to confirm the directory/file location set to the storage system and to grasp the state of the storage system (e.g. the performance and the load). Also, the location determining section 12 refers to the location policy data 16 to specify the storage system usable by the client terminal 30k. The location determining section 12 selects the location (the storage system) as an access destination for the client terminal 30k from among the storage systems usable by the terminal in consideration of the performance and load of the storage system. For example, when the load of the storage system 40n exceeds a previously set threshold value, the location determining section 12 changes the access destination of the client terminal from the storage system 40n to another storage system. At this time, it is desirable that the location determining section 12 primarily sets a storage system with high performance or a small load storage system as an access destination in consideration of the performance and load of the storage system. When the access destination of the client terminal 30k is determined, the location determining section 12 records in the storage as the access policy data 17.

Like the access policy data 17 shown in FIG. 4B, when the priority 163 is set for every client terminal, it is desirable that the location determining section 12 determines the directory/ file location (storage system) as the access destination of the client terminal in consideration of the priority 163. For example, an accessible location (storage system) is set previously according to each priority, and the access destination is determined from among the storages corresponding to the priority of the client terminal of a setting object. Note that the algorithm for determining the access destination may be optionally set if considering the load and performance of the storage system, and the priority of the user, in addition to the case shown in the present exemplary embodiment.

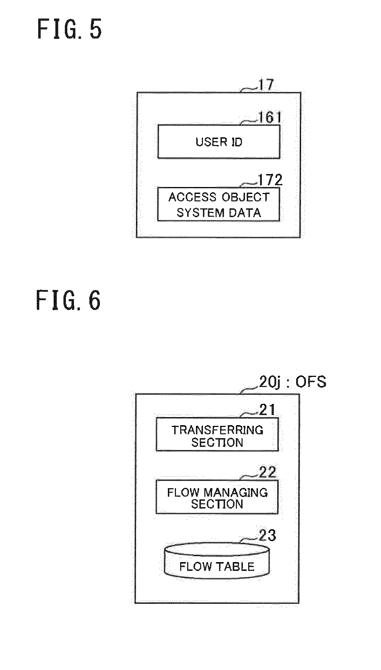

FIG. 5 is a diagram showing an example of the configuration of the access policy data 17 according to the present invention. The access policy data 17 is data showing the directory/ file location as the access destination for every user (for example, a storage system as a storage object). Referring to FIG. 5, a user ID 161 for specifying a client terminal and access object system data 172 for specifying the storage system as an access destination of the client terminal and the directory/file location are related to each other and set in the access policy data 17. When the access destination of the client terminal is changed, data for specifying the storage system and the directory/file location after the change are recorded in the access object system data 172. At this time, it is desirable that the data for specifying the storage system before the change of the access destination and the data after the change are related to each other and recorded in the access object system data 172. The data recorded as the access object system data 172 and specifying the storage system is related to the corresponding system data 151, and the data for specifying the directory/file location is related to the corresponding location data 154. By referring to such access policy data 17, the location determining section 12 and the flow control section 13 can specify the storage system and the directory/file location set as the access destination of the client terminal 30k at the present time, and the storage system set as the access destination before the change. That is, the open flow controller (OFC) 10i according to the present invention can manage the directory/file location of the storage system where files for every client terminal are stored.

Therefore, the flow control section 13 carries out the setting or deletion of a flow entry (rule + action) for every open flow switch (OFS) 20j according to the flow table 18. The open flow switch (OFS) 20j refers to the set flow entry, and the action corresponding to the rule is executed according to the header data of a reception packet (for example, the relay and discard of the packet data). The details of the rule and the action will be described later.

The flow control section 13 carries out the setting, deletion or updating of the flow entry (rule + action) to the open flow switch (OFS) 20j according to a reception notice of the first packet from the open flow switch (OFS) 20j and the change of the access policy data 17 by the location determining section 12. Here, the first packet shows the packet which does not conform to the flow entry (the rule) set to the open flow switch (OFS) 20j.

A flow identifier for specifying a flow entry, an identifier for identifying the setting object (the open flow switch (OFS) 20j) of the flow entry, route data, and the flow entry (rule and action data) are related to each other and set to the flow table 18. The flow entries generated for all the open flow switches (OFS) 20j as the control object of the open flow controller (OFC) 10i are set to the flow table 18. Also, a method of handling communication such as the data about QoS and encryption for every flow may be defined in the flow table 18.

For example, a combination of addresses and identifiers which are used from the layer 1 to the layer 4 of the OSI (Open Systems Interconnection) reference model and which are contained in the header data of the packet of TCP/IP is defined in the rule set to the flow entry. For example, a combination of a physical port of layer 1, a MAC address of layer 2, a VLAN tag (VLAN id), an IP address of layer 3, and a port number of layer 4 is set as the rule. Note that a priority (VLAN Priority) may be given to the VLAN tag.

Here, the identifiers such as the port number and the addresses may be set to the rule in a predetermined range. Also, it is desirable that the identifiers and the addresses of a transmission source and a destination can be distinguished for the rule. For example, a range of the MAC destination address, a range of a destination port number for specifying an application in a connection destination, and a range of a transmission source port number for specifying an application in a connection source are set as the rule. Moreover, an identifier for specifying a data transfer protocol may be set as the rule.

For example, a method of processing the packet of TCP/IP is prescribed in the action data. For example, data showing whether or not to relay a reception packet and a transmission destination in case of relaying are set. Also, a copy of the packet and data indicating the packet to be discarded may be set to the action. The route data is data for specifying a route to which a flow entry (rule + action) is applied.

The flow control section 13 calculates a communication route based on the access policy data 17 and generates a flow entry to be set to the open flow switch (OFS) 20j on a communication route. For example, when generating the flow entry in response to a notice of a first packet, the flow control section 13 specifies a client terminal of a transmission source or a transmission destination based on the header data of the first packet, and refers to the access policy data 17 to specify the storage system and the directory/file location (the access object system data 172) set as the access destination of the client terminal (user ID 161). The flow control section 13 calculates a communication route between the specified client terminal and the storage system (the file location), and generates the flow entry to be set to the open flow switch (OFS) 20j on the communication route, to set to the flow table 18 and the flow table 23 of the open flow switch (OFS) 20j.

Or, when generating the flow entry in response to the change (update) of the access policy data 17, the flow control section 13 specifies a client terminal based on the user ID 161 of the changed access policy data 17 and specifies the storage system as the access destination based on the the access object system data 172 related to the user ID 161. The flow control section 13 calculates a communication route between the specified client terminal and the storage system, and generates the flow entry to be set to the open flow switch (OFS) 20j on the communication route to set to the flow table 18 and the flow table 23 of the open flow switch (OFS) 20j .

By the above-mentioned configuration, the open flow controller (OFC) 10i of the present invention generates the flow entry used to transfer a packet by using as a trigger, the change of the access policy data 17 according to the situation change of the storage system in addition to a reception notice of the first packet from the open flow switch (OFS) 20j. Also, the open flow controller (OFC) 10i sets the flow entry to the open flow switch (OFS) 20j on the calculated communication route. Thus, the setting and change of the communication route according to the load distribution and the location policy become possible. In the present invention, because a communication control route is carried out by using the open flow protocol, the directory/file location as an access destination can be determined without making a user be conscious at the time of maintenance for the load distribution and the fault avoidance, and distribution arrangement becomes possible as a system.

FIG. 6 is a diagram showing the configuration of open flow switch 20j according to the present exemplary embodiment of the present invention. Therefore, the open flow switch (OFS) 20j determines a processing method (action) of the reception packet based on the flow table 23 set (updated) by the open flow controller (OFC) 10i. The open flow switch (OFS) 20j has a transferring section 21 and a flow managing section 22. The transferring section 21 and the flow managing section 22 may be configured in hardware or in software which is executed by a CPU.

The flow table 23 which is set by the open flow controller (OFC) 10i is stored in the storage (not shown) of the open flow switch (OFS) 20j. The flow managing section 22 sets the flow entry (rule + action) acquired from the open flow controller (OFC) 10i to the flow table 23. When the header data of the reception packet does not conform (fit) to the rule recorded in the flow table 23, the flow managing section 22 determines the packet as a first packet, and notifies the reception of the first packet to the open flow controller (OFC) 10i and issues a setting request of the flow entry. At this time, the open flow switch (OFS) 20j carries out the notification of the first packet to the open flow controller (OFC) predetermined from among the controller group 100.

The flow managing section 22 sets the flow entry (rule + action) which is transmitted from the open flow controller (OFC) 10i to the flow table 23. In the present invention, the flow table 23 of the open flow switch (OFS) 20j is updated by using as a trigger, the reception of the first packet in the open flow switch (OFS) 20j and the change of the load of the storage system.

When the header data of the reception packet conforms (matches) to the rule recorded in the flow table 23, the packet is transferred to another open flow switch (OFS) or the storage system 40n by the transferring section 21. In detail, the transferring section 21 specifies the action corresponding to the rule which conforms (coincides) to the header data of the packet. The transferring section 21 transfers the packet to a destination node specified by the action (the open flow switch (OFS) 20j or the storage system 40n). The setting of the flow table 23 of the open flow switch (OFS) 20j and the packet transfer operation are based on the open flow protocol (Reference Non-Patent Literature 1).

### (Operation)

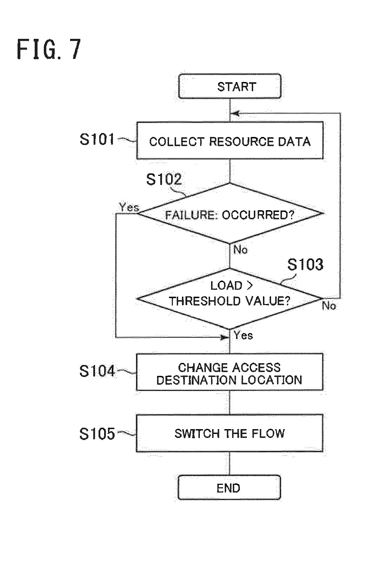

Referring to FIG. 1 and FIG. 7, an example of a flow switching operation in the present invention will be described. FIG. 7 is a flow chart showing an example of the flow switching operation by the computer system in the exemplary embodiment of the present invention. Below, the flow switching operation by the open flow controller (OFC) 10i will be described.

First, the open flow controller (OFC) 10i collects resource data 15 (the system data, the performance data, the load data, and the directory/file location data) from the storage system 401 to 40n (Step S101). The collection of resource data 15 may be carried out according to a request from the open flow controller (OFC) 10i and may be notified independently by each of the storage systems 401 to 40n. Also, the collection of resource data 15 may be regularly carried out, and may be carried out at the timing preset for every the storage system or in response to increase of a load to exceed a threshold value or occurrence of a failure.

The location determining section 12 of the open flow controller (OFC) 10i refers to load data 153 to specify the storage system in which the failure has occurred or the storage system in which the load exceeded the threshold value, when the resource data 15 is updated (Steps S102, S103). Here, the location determining section 12 of the open flow controller (OFC) 10i stands by until the resource data 15 is updated when there is a failure in neither the storage systems in the storage system which itself manages and the load does not exceed a threshold value (Steps S102 No, S103 No).

Referring to updated load data 153, when there are a storage system in which a failure has occurred and a storage system that the load exceeded a threshold value, the location determining section 12 changes location of the access destination (Step S104). In detail, the location determining section 12 refers to the access policy data 17 to specify the client terminal having the storage system in which the failure has occurred or the storage system that the load exceeded the threshold value as the access object, the client terminal refers to location policy data 16 to specify an accessible storage system. The location determining section 12 determines the optimal combination from among combinations of the specified client terminal and the accessible storage system based on the performance data 152 and the load data 153, and determines the storage system and the directory/file location as an access destination of the client terminal and changes the access policy data 17. At this times, when the priority 163 for every client terminal is set to the location policy data 16 as shown in FIG. 4B, it is desirable that the location determining section 12 determines the storage system as the access destination of the client terminal in consideration of the priority 163. Thus, the priority control according to the client terminal becomes possible.

When the access policy data 17 is updated, the flow control section 13 carries out a flow switching based on the changed access policy data 17 (Step S105). In detail, the flow control section 13 first refers to the changed access policy data 17 to specify a point of the flow as a switching object (the client terminal and the access destination storage system before the change) and a point of the flow (the client terminal and the access destination storage system after the change) after switching (after the change). Next, the flow control section 13 generates a flow entry corresponding to the flow after the change to set to the open flow switch (OFS) 20j on the communication route corresponding to the flow and the flow table 18. The calculation of the communication route corresponding to the flow and the setting of the flow entry are based on the open flow protocol (see Non-Patent Literature 1). At this time, it is desirable that the flow entry having the same rule as the newly set flow entry is deleted from the flow tables 18 and 23 or is set to an unusable state.

As mentioned above, the open flow controller (OFC) 10i according to the present invention realizes a route control, the fault recovery, and the load distribution by controlling the open flow switch (OFS) 20j from an external unit according to the load state and the fault occurrence situation in the storage system group 400. For example, when a failure has occurred or a heavy load state appears in the storage system 401 accessed by the client terminals 301, 302, and 303, and a heavy load state is set, the open flow controller (OFC) 10i switches a flow A to the storage system 401 having the client terminals 301, 302, and 303 as an end point to a flow B having the client terminal 301 and the storage system 402 as end points, a flow C having the client terminal 302 and the storage system 403 as end points, and a flow D having the client terminal 303 and the storage system 403 as end points. In this way, it becomes possible to carry out a maintenance such as a hardware exchange of the storage system 401 and the software repair without any influence to the client terminals 301 to 303, by the switching control of the flow by the open flow controller (OFC), even if the storage system 401 stops service. That is, according to the present invention, an N cluster control function is realized by using the open flow protocol, it becomes possible to continue the access to the storage system from the client terminals 301, 302, and 303, and the redundancy of the storage system is secured, even if the storage system as the access destination stops and becomes an heavy load state.

In an example shown in FIG. 7, a specific example in which a failure has occurred in the storage system or flows are switched according to the flow has been described. The present invention is not limited to this example, and the above example may be carried out based on data which stops the storage system. For example, when the maintenance is necessary in the storage system 40n, it is required to stop the storage system. In such a case, it is possible to change the usable system data 162 of the location policy data 16 to inhibit the use of the storage system 40n. Or, it is possible to set data indicating the stop of the storage system 40n in the resource data of the storage system 40n and for the open flow controller (OFC) 10i to switch the flow having the stopped storage system as an access destination to another flow, by acquiring the data by the open flow controller (OFC) 10i.

Also, the priority flow control for every client terminal by the open flow controller (OFC) becomes possible by using the priority 163 set for every client terminal, like the location policy data 16 shown in FIG. 4B. Below, the flow switching (setting) when the priority 163 of "1" of the client terminal 301 is set higher than the priority 163 of "2" of the client terminal 302 will be described as an example

When the access to the storage system 401 makes slowdown due to the failure occurrence or the heavy load state in the storage system 401 while the client terminals 301 and 302 access the storage system 401, the open flow controller (OFC) 10i switches a flow A to the storage system 401 having the client terminals 301 and 302 as end points to a flow B having the client terminal 301 and the storage system 402 as end points and a flow C having the client terminal 302 and the storage system 403 as end points. At this time, the open flow controller (OFC) 10i determines the storage system as an access destination according to the priority set for every client terminal. For example, when the usable storage systems as the access destination by the client terminals 301 and 302 are the storage systems 401 to 403, and the load of the storage system 402 is lighter than that of the storage system 403, the access object of the client terminal 301 with a high priority is changed into the storage system 402 with the lighter load and the access object of the client terminal 302 with a lower priority is changed into the storage system 402 with a heavier load than that of the storage system 402. Thus, according to the present invention, the client terminal with the higher priority can continue to receive the more comfortable service.

Moreover, the flow switching may be carried out in consideration of the performance of the storage system in addition to the state of the storage system (for example, data indicating the stop state, the failure data, and the load). For example, when the storage system 403 has higher performance than the storage system 402, the open flow controller (OFC) 10i carries out the flow switching so that the storage system 403 with the higher performance is set as the access destination of the client terminal 301 with the higher priority, and the storage system 403 with the lower performance is set as the access destination of the client terminal 302 with the lower priority. Or, when the client terminals with the lower priorities (e.g. the client terminals 302 to 30k) are more than the client terminal with the higher priority (e.g. the client terminal 301), the open flow controller (OFC) 10i carries out the flow switching so that the storage system 402 with the lower performance is set as the access destination of the less client terminal 301 with the higher priority and the storage system 403 with the higher performance is set as the access destination of the client terminals 302 to 30k with the lower priorities. Thus, it becomes possible that the load to the storage system 402 with the lower performance is suppressed to be lower than that of the storage system 403 and the service value to the client terminal 301 with the higher priority can be kept high.

In the present invention, the access destination can be changed according to the state and performance of the storage system while setting a priority for every client terminal. Therefore, it becomes possible that for example, an expensive storage system 401 is set for a user having a high priority access right, a relatively cheap storage system 402 is set for a user having a lower priority access right, and a cheap storage system 403 is used to store a file which is comparatively little accessed for backup. Note that the priorities 163 set to the location policy data 16 may have a plurality of levels except for two levels.

Moreover, the flow switching may be carried out in a case that the open flow switch (OFS) 20j cannot be used, in addition to a case that the storage system cannot be used. In this case, the open flow switch (OFS) 20j notifies data indicative of the load data (e.g. a traffic quantity, and a congestion quantity) and the failure occurrence to the open flow controller (OFC) 10i through the control network 500 regularly, at a predetermined time, or at the time of failure occurrence or when the load exceeds a threshold value. The flow switching according to the state of the open flow switch (OFS) 20i becomes possible mentioned above, by managing the load data of the open flow switch (OFS) 20j by the open flow controller (OFC) 10i, like the load data of the storage system 40n.

Although it is desirable that the open flow controller (OFC) 10i changes the communication route and the access destination storage system when the load data exceeds the threshold value for a predetermined period, a predetermined rate of communication route may be compulsorily change into another route or another access destination through the schedule. Thus, it is possible to detect a high traffic state in a real time, to carry out the load distribution and to converge the traffic congestion in a short time. Also, when the flow switching is carried out regularly, it is possible to avoid the abnormal traffic generation and the increase of the load in advance.

The open flow controller (OFC) 10i according to the present invention carries out the resource management and location management of the storage system group 400 in addition to the route control of the network. Therefore, a cluster control function in the storage system of a cloud environment and the priority access control for every user (client terminal) can be realized while the whole network is handled as a virtual switch.

Also, because the open flow controller (OFC) 10i carries out the route control, the failure recovery, and the load distribution in units of flows, the visualization of the flow for every user (client terminal) is possible after the failure recovery and the load distribution. Because the open flow controller (OFC) 10i manages the resource data 15 of the storage system group 400, the performance data and the failure location for every flow can be easily specified, and the redundant configuration including the storage system and a network is made easy. Therefore, according to the present invention, the stable provision of business service of the whole system becomes possible. Also, the maintenance can be easily carried out without stopping the service, in the complicated network environment.

In the computer system according to the present invention, because the open flow protocol is used, the connection of various networks appliances such as network equipment for every L1/L2/L3/L4 function and authentication servers of ADS and LDAP and the complexity of the operation and management of these appliances can be eliminated, and the load distribution and the priority access control can be realized in a simple network configuration. Also, a system which does not depend on the functions (performance) of the storage system and the storage systems of different kinds can be built. The user (client terminal) can use the storage system even in the cloud environment, without being conscious of the situation and the file location of the storage system and the network.

Because the user is not required to be conscious of the situation of the network, it is possible to extend/reduce the storage system to scale out. Thus, because the storage system under the cloud environment can be extended to scale out without depending on the function of the storage system, the user can introduce a storage system according to the network environment easily.

As described above, the exemplary exemplary embodiments of the present invention have been described in detail. However, a specific configuration is not limited to the above exemplary embodiments and a modification in the range which does not deviate from the features of the present invention is contained in the present invention. In the exemplary embodiments, the priority access control and the N-cluster control by a single open flow controller (OFC) have been described. However, the present invention is not limited to these and can be realized by a plurality of open flow controllers (OFC) sharing the location policy data 16. Also, when the priority access control and the N-cluster control are carried out by the single open flow controller (OFC), another open flow controller (OFC) can be used as the backup system, by sharing the location policy data 16 with the other open flow controller (OFC). When the open flow controller (OFC) of a current use system is disconnected from the network due to a failure, the open flow controller (OFC) of a backup system is not required to take over the resource data 15 from the open flow controller (OFC) of the current use system and is enough to newly collect resource data 15 from the storage systems 401 to 40n.

Also, when a new storage system is added to the computer system, the priority access control and the N-cluster control can be executed immediately by registering the data of the storage system to the existing open flow controller (OFC). Note that the open flow controller (OFC) can register a new storage through automatic detection of the addition of the new storage to the storage system, by registering the credential of the new storage on the open flow controller (OFC) previously.

Moreover, in the exemplary embodiments, the change of the communication route to the storage system has been described as an example. However, the present invention is not limited to this, and a server apparatus or a computer system which provides service to the client terminal may be employed instead of the storage system.

Note that this patent application claims a priority on convention based on Japan Patent Application No. JP 2012-074936, and the disclosure thereof is incorporated herein by reference.

## Claims

1. A computer system comprising:
a controller;
a plurality of switches configured to carry out relay processing of a reception packet based on flow entries set by said controller; and
a plurality of storage systems,
wherein said controller changes the flow entry of each of said plurality of switches based on resource data acquired from said plurality of storage systems, so as to change one storage system of said plurality of storage systems as an access destination of a client terminal.

2. The computer system according to claim 1, wherein the resource data comprises load data of each of said plurality of storage systems, and
wherein said controller refers to the load data to change said storage system having a load exceeding a threshold value from the access destination of said client terminal.

3. The computer system according to claim 1 or 2, further comprising a plurality of client terminals containing said client terminal,
wherein said controller determines one storage system of said plurality of storage systems as the access destination of each of said plurality of plurality of client terminals based on a priority set to each of said plurality of client terminals.

4. The computer system according to claim 3, wherein said controller holds directory/file location data of each of said plurality of client terminals and changes the location data based on the change of the storage system as the access destination of said client terminal.

5. The controller which is used in the computer system according to any of claims 1 to 4.

6. A communication route changing method comprising:
setting to each of switches on a communication route by a controller, a flow entry which prescribes a relay destination of a reception packet by said switch; and
changing by said controller, the flow entry of said switch based on resource data acquired from a plurality of storage systems so as to change an access terminal of a client terminal from one storage system of said plurality of storage systems.

7. The communication route changing method according to claim 6, wherein the resource data comprises load data of each of said plurality of storage systems, and
wherein said changing the flow entry comprises:
referring to the load data by said controller to change the access destination of said client terminal from said storage system with a load exceeding a threshold value.

8. The communication route changing method according to claim 6 or 7, wherein said changing the flow entry comprises:
determining one storage system of said plurality of storage systems as the access destination of each of said plurality of client terminals based on a priority set to said client terminal by said controller.

9. The communication route changing method according to claim 8, further comprising:
holding a directory/file location data of each of said plurality of client terminals systems by said controller,
wherein said changing the flow entry further comprises:
changing by said controller, the location data based on the change of said storage system as the access destination of said client terminal.

10. A recording medium in which a communication route changing program is stored to make a computer execute a communication route changing method according to any of claims 6 to 9.
